# FASCICULE DE BREVET EUROPEEN

(11) **EP 2 769 497 B1**
(45) Date de publication et mention de la délivrance du brevet: **26.07.2017**
(21) Numéro de dépôt: 12775008.1
(22) Date de dépôt: 16.10.2012
(51) Int. Cl.: H04J 3/06, H04B 3/54

(54) **PROCÉDÉ ET DISPOSITIF DE SYNCHRONISATION D'UN APPAREILLAGE CONNECTÉ À UN RÉSEAU DE COMMUNICATION**
VERFAHREN UND VORRICHTUNG ZUR SYNCHRONISIERUNG EINES APPARATES, DER MIT EINEM KOMMUNIKATIONSNETZWERK VERBUNDEN IST
METHOD AND DEVICE OF SYNCHRONIZATION OF AN APPARATUS CONNTECTED TO A COMMUNICATIONSNETWORK

(30) Priorité: 17.10.2011 FR 1159345
(43) Date de publication de la demande: 27.08.2014
(73) Titulaire: General Electric Technology GmbH, 5400 Baden (CH)
(72) Inventeur: LECONTE, Frédéric, F-01330 Amberieux en Dombes (FR); RAYON, Jean-Luc, F-69250 Montanay (FR); GARCIA, Antoine, 34590 Marsillargues (FR)
(74) Mandataire: Cleary, Fidelma
(86) Numéro de dépôt international: PCT/EP2012/070450
(87) Numéro de publication internationale: WO 2013/057081

(56) Documents cités:
- WO-A2-02/073850
- US-A1- 2003 036 864
- US-A1- 2006 259 806
- US-B2- 8 026 628

## Description

### DOMAINE TECHNIQUE

L'invention se rapporte au domaine de la synchronisation d'appareillages par rapport à un signal de synchronisation.

Les installations industrielles modernes comportent généralement un nombre important d'appareillages devant fonctionner en concert pour effectuer des étapes de production successives et parfaitement coordonnées. Il en résulte que les appareillages équipant de telles installations industrielles doivent être précisément et régulièrement synchronisés.

Cette problématique est également présente pour les appareillages de sécurité de ce même type d'installations. En effet, les appareillages de sécurité sont généralement adaptés pour surveiller des paramètres de l'installation de façon synchrone pour permettre une comparaison entre les différents paramètres surveillés et définir si l'installation reste dans des conditions de sécurité prédéfinies. Pour permettre la comparaison entre des paramètres surveillés par des appareillages de sécurité différents, il est donc nécessaire que les appareillages de sécurité soient parfaitement synchronisés entre eux.

L'invention vise plus particulièrement les installations de production d'énergie et les appareillages de surveillance utilisés lors du transport de l'énergie produite, ces appareillages devant être synchronisés avec une tension de synchronisation pouvant être distante de plusieurs kilomètres et donc non accessible auxdits appareillages

L'invention se rapporte plus précisément à un procédé de synchronisation d'un appareillage connecté à un réseau de communication. L'invention se rapporte également à un dispositif de synchronisation utilisé lors dudit procédé de synchronisation et à un module de synchronisation équipant un appareillage devant être synchronisé lors de ce même procédé de synchronisation.

Il est également connu du document WO 02/073850 un procédé de synchronisation d'un dispositif client connecté à un réseau de communication, le dispositif client étant relié à un réseau d'alimentation électrique alternatif. Le procédé selon ce document comporte les étapes consistant à
- mesurer une durée à partir de la tension d'alimentation et d'une tension fournie par une horloge locale, cette durée étant supérieure à une durée de bruit,
- communiquer, au travers du réseau de communication, la valeur de synchronisation la durée au dispositif client.

Il est également connu du document US 2003/036864 un procédé de synchronisation d'un compteur électrique connecté à un réseau de communication et relié à un réseau d'alimentation électrique alternatif. Le procédé selon ce document comporte les étapes consistant à :
- communiquer, au travers du réseau de communication, une valeur de synchronisation au compteur électrique,
- synchroniser le compteur électrique à partir de la tension d'alimentation ou à partir de la valeur de synchronisation quand la tension d'alimentation n'est pas disponible.

### ÉTAT DE LA TECHNIQUE ANTÉRIEURE

Il existe un certain nombre de méthodes de synchronisation qui sont actuellement utilisées dans des installations industrielles.

Parmi ces méthodes, on peut citer la synchronisation par onde radio. Cette méthode consiste à doter chacun des appareillages à synchroniser de récepteur radio apte à recevoir un signal de synchronisation d'un émetteur radio. Cet émetteur radio, tel que l'émetteur radio allemand DCF-77 et l'émetteur radio anglais MSF-60, diffuse à intervalle régulier un signal horaire permettant de synchroniser une horloge présente dans chacun des appareillages à synchroniser.

Néanmoins, si une telle méthode permet une synchronisation des appareillages fiable et de faible coût, elle présente l'inconvénient de nécessiter que chacun des appareillages soit dans une zone de couverture de l'émetteur radio. Elle n'est donc pas utilisable dans certaines zones géographiques, telles que dans certaines zones désertiques ou maritimes, et est inutilisable pour des appareillages en sous-sol ou dans des environnements présentant de fortes perturbations électromagnétiques.

Une autre méthode consiste à utiliser un réseau de temporisation câblé, tel qu'un réseau utilisant des interfaces de communication du type RS422 ou RS485. Selon cette méthode les appareillages à synchroniser sont connectés à un dispositif de synchronisation au travers d'un réseau de temporisation dédié. Ainsi le dispositif de synchronisation transmet par le réseau de temporisation, et à intervalle régulier, un signal de synchronisation à tous les appareillages pour les synchroniser par rapport à une horloge de référence du dispositif de synchronisation.

Si une telle méthode permet une synchronisation fiable tout en requérant l'installation d'équipements de faible coût, elle présente néanmoins l'inconvénient de nécessiter la couteuse installation d'un réseau dédié uniquement à la synchronisation des appareillages.

Une autre méthode consiste à utiliser un réseau de communication préexistant, tel qu'un réseau de communication utilisant un protocole Ethernet et auquel sont reliés les appareillages à synchroniser, pour transmettre un signal de synchronisation. Cette méthode, fait généralement appel à un protocole de temps réseau (d'acronyme anglais NTP). Cette méthode présente l'avantage de ne pas demander de réel surcoût, le réseau utilisé pour la synchronisation étant déjà présent et utiliser pour les communications entre appareillages.

Néanmoins, cette méthode, en raison des latences réseau, ne permet pas d'atteindre une précision de synchronisation de l'ordre de la microseconde sans modification coûteuse des équipements réseau.

Une autre méthode consiste à utiliser une tension d'alimentation commune à tous les appareillages à synchroniser pour les synchroniser. Selon cette possibilité, chacun des appareillages comprend soit un module de synchronisation dédié présentant une entrée destinée à être connectée audit réseau d'alimentation, soit un système de diviseur de tension pour abaisser la tension d'alimentation et permettre son traitement par un circuit basse tension. Dans ces deux cas, le passage de la tension à une valeur donnée est utilisé comme référence pour la synchronisation des appareillages.

Si cette méthode de synchronisation permet une synchronisation fiable et précise, elle ne permet pas de synchroniser des appareillages par rapport à un signal de synchronisation décalé par rapport à la tension d'alimentation. De même elle ne permet qu'une synchronisation d'horloge, il n'y a pas possibilité de transmettre une information temporelle.

### EXPOSÉ DE L'INVENTION

Un des buts de la présente invention est de fournir un procédé de synchronisation d'un appareillage nécessitant un faible coût de mise en place et permettant une synchronisation précise avec une tension de synchronisation de type alternatif, ladite tension de synchronisation n'étant pas accessible audit appareillage à synchroniser.

A cet effet, l'invention concerne un procédé de synchronisation d'appareillage connecté à un réseau de communication, l'appareillage étant relié à un réseau d'alimentation électrique présentant au moins une tension d'alimentation du type alternatif, le procédé comportant les étapes consistant à :
a) mesurer un décalage temporel entre la tension d'alimentation et une tension de synchronisation du type alternatif, la tension de synchronisation présentant une fréquence de synchronisation,
b) calculer une valeur de synchronisation à partir du décalage temporel, ladite valeur de synchronisation correspondant à un décalage temporel calculé entre la tension d'alimentation et la tension de synchronisation lors du prochain passage de la tension d'alimentation à un état donné,
c) communiquer, au travers du réseau de communication, la valeur de synchronisation à l'appareillage,
d) détecter par l'appareillage le passage de la tension d'alimentation à l'état donné,
g) synchroniser l'appareillage sensiblement simultanément à la détection du passage de la tension d'alimentation à l'état donné à partir de la valeur de synchronisation.

Un tel procédé permet une synchronisation précise des appareillages d'une installation par rapport à une tension de synchronisation non accessible audit appareillage, ceci avec un coût réduit de mise en place, le procédé permettant l'utilisation d'un réseau de communication préexistant.

Lors de l'étape c) consistant à communiquer la valeur de synchronisation, la valeur de la fréquence de synchronisation peut également être communiquée à l'appareillage.

Une telle communication de la valeur de la fréquence de synchronisation permet de synchroniser l'appareillage avec une tension de synchronisation présentant une fréquence non définie à l'avance et non accessible à ce dernier sans nécessiter une reprogrammation de l'appareillage.

Selon une première variante de l'invention, l'état donné de la tension d'alimentation peut être une valeur de la tension donnée préférentiellement égale à 0 volt.

L'utilisation d'un tel état donné de la tension d'alimentation permet une étape de détection du passage de la tension d'alimentation dans ce même état qui soit simplifiée, réduisant ainsi les coûts de mise en place du procédé de synchronisation.

Selon une seconde variante de l'invention, l'état donné de la tension d'alimentation peut être un passage en front prédéterminé de la tension d'alimentation à une valeur donnée, le front prédéterminé étant choisi dans le groupe comportant le front montant et le front descendant.

Avec un tel état donné, la durée entre deux passages de la tension d'alimentation dans l'état donné est égale à la période de la tension d'alimentation optimisant ainsi le temps disponible pour que les étapes de a) à c) soient réalisées.

Le procédé peut comporter en outre une étape a') précédente de l'étape a), l'étape a') consistant à détecter le passage de la tension d'alimentation à un second état donné, l'étape a) étant réalisée sensiblement simultanément à l'étape a').

Le second état donné de la tension d'alimentation peut être adapté de manière à ce que l'ensemble des étapes a) à c) soit effectuées avant le prochain passage de la tension d'alimentation à l'état donné.

Cette étape a') permet d'assurer, pour un second état donné adapté, que le temps entre l'étape a) et l'étape d) soit suffisant pour que les étapes b) et c) soient totalement accomplies.

Le second état donné peut être sensiblement le même que l'état donné.

Un tel second état donné permet de maximiser le temps entre le passage de la tension d'alimentation par le second état donné et par l'état donné assurant ainsi le bon accomplissement des étapes b) et c).

Le procédé peut comprendre en outre les étapes consistant, entre les étapes d) et g), à :
e) détecter pour l'appareillage une erreur de synchronisation,
f) signaler un problème de désynchronisation de l'appareillage (200) si une erreur de synchronisation est détectée.

Selon cette possibilité de l'invention, on entend par erreur de synchronisation:
- une non réception de la valeur de synchronisation,
- une non réception de la valeur de la fréquence de synchronisation, si l'étape c) comprend la communication de ladite valeur,
- une perte du réseau de communication,
- un problème dans la détection du passage de la tension d'alimentation à l'état donné,
- ou la détection d'une désynchronisation supérieure à une valeur seuil.

Une telle détection d'une erreur de synchronisation permet une vérification de la bonne synchronisation d'un appareillage lors de la mise en oeuvre d'un tel procédé de synchronisation.

L'étape g) peut ne pas être mise en oeuvre si une erreur de synchronisation est détectée.

Ainsi, l'appareillage, pour lequel une erreur de synchronisation est détectée, continu à fonctionner à la précédente synchronisation évitant ainsi audit appareillage une synchronisation erronée qui pourrait être préjudiciable au fonctionnement de l'ensemble de l'installation.

L'étape e) peut comprendre au moins les sous-étapes consistant à :
e') calculer pour l'appareillage (200) d'une valeur de désynchronisation reflétant le décalage de synchronisation nécessaire pour synchroniser ledit appareillage (200) lors de l'étape e),
e'') comparer en valeur absolue la valeur de désynchronisation avec une valeur seuil de désynchronisation et détecter pour l'appareillage une erreur de synchronisation si la valeur de désynchronisation est supérieure en valeur absolue à une valeur seuil de désynchronisation.

De telles étapes permettent la détection d'une erreur de synchronisation de l'appareillage.

Le réseau de communication peut être un réseau de communication utilisant un protocole de type Ethernet.

L'utilisation d'un tel réseau de communication permet de faciliter la communication lors de l'étape c), cette communication pouvant être réalisée sous la forme de trames encapsulées selon le protocole Ethernet.

La fréquence de la tension de synchronisation peut être sensiblement égale, multiple entier ou fraction entière de la fréquence de la tension d'alimentation, la fréquence de la tension de synchronisation étant préférentiellement égale à la fréquence de la tension d'alimentation.

Une telle valeur de la fréquence de la tension de synchronisation permet une détection et un calcul simplifié de, respectivement, la valeur de décalage temporel et la valeur de décalage temporel calculé, celles-ci correspondant, pour une fréquence de la tension de synchronisation sensiblement égale à celle de la tension d'alimentation, à simplement mesurer et calculer le décalage temporel entre la tension d'alimentation et la tension de synchronisation.

L'invention se rapporte également à un dispositif de synchronisation pour synchroniser un appareillage, ledit dispositif de synchronisation étant relié à un réseau d'alimentation électrique présentant au moins une tension d'alimentation de type alternatif, le dispositif de synchronisation comportant :
- des moyens de mesure du décalage temporel adaptés pour mesurer un décalage temporel entre la tension d'alimentation du réseau d'alimentation et une tension de synchronisation,
- un moyen de calcul adapté pour calculer une valeur de synchronisation correspondant à un décalage temporel,
- un moyen de communication adapté pour être connecté à un réseau de communication et pour communiquer au travers dudit réseau une valeur de synchronisation.

Un tel dispositif permet la synchronisation d'appareillages connectés à un réseau de communication avec une tension de synchronisation non accessible auxdits appareillages.

L'invention se rapporte également à un module de synchronisation équipant un appareillage à synchroniser, ledit module de synchronisation étant relié à un réseau d'alimentation électrique présentant au moins une tension d'alimentation du type alternatif, le module de synchronisation comportant :
- un moyen de connexion à un réseau de communication adapté pour recevoir une valeur de synchronisation,
- un moyen de détection d'un état donné de la tension d'alimentation,
- un moyen de synchronisation de l'appareillage électrique à partir de la valeur de synchronisation communiquée au travers du réseau de communication.

Un tel module de synchronisation permet la synchronisation de l'appareillage qu'il équipe avec une tension de synchronisation qui n'est pas accessible audit appareillage.

Le module peut comporter en outre :
- un moyen de traitement adapté pour détecter une erreur de synchronisation,
- un moyen de signalisation adapté pour signaler un problème de désynchronisation de l'appareillage,
le moyen de traitement étant en outre adapté pour communiquer avec ledit moyen de signalisation de manière à signaler un problème de synchronisation lors de la détection d'une erreur de synchronisation.

Un tel module permet de signaler un problème de synchronisation de l'appareillage lors de sa synchronisation.

### BRÈVE DESCRIPTION DU DESSIN

La présente invention sera mieux comprise à la lecture de la description d'exemples de réalisation, donnés à titre purement indicatif et nullement limitatif, en faisant référence au dessin annexé sur lequel :

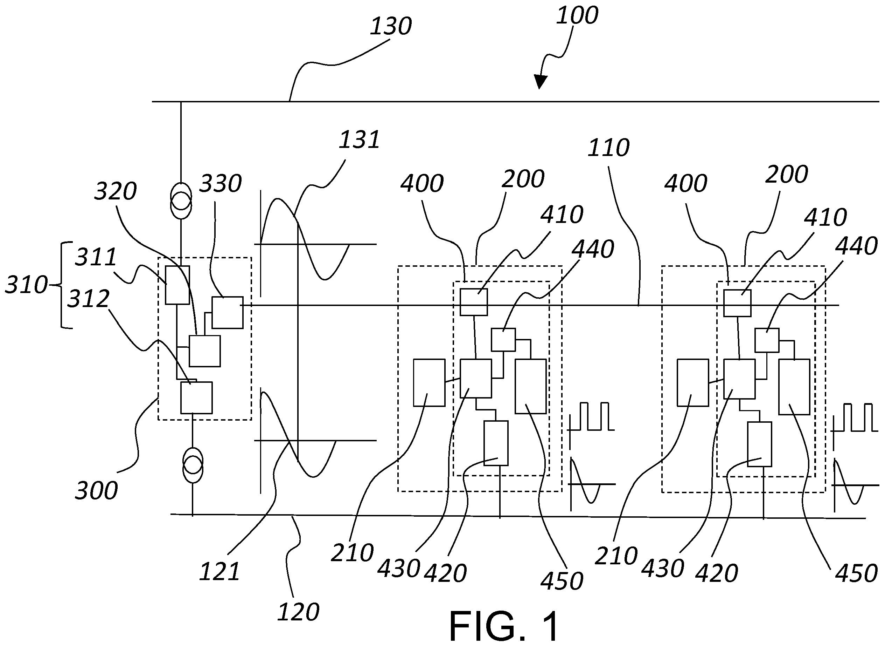

- la figure 1 illustre un exemple d'installation utilisant un procédé de synchronisation selon l'invention.

### EXPOSÉ DÉTAILLÉ D'UN MODE DE RÉALISATION PARTICULIER

La figure 1 présente un exemple schématisé d'installation 100 utilisant un procédé de synchronisation d'appareillages 200 connectés à un réseau de communication 110.

Une telle installation 100 comporte :
- des appareillages 200 à synchroniser par rapport à une tension de synchronisation, lesdits appareillages 200 étant reliés à un réseau d'alimentation électrique 120 et étant connectés à un réseau de communication 110,
- un module de synchronisation 400 équipant chacun des appareillages 200 à synchroniser,
- un réseau de communication 110,
- et un dispositif de synchronisation 300 connecté au réseau de communication 110 et relié à un réseau de synchronisation 130 et au réseau d'alimentation électrique 120.

Le réseau d'alimentation électrique 120 présente au moins une tension d'alimentation 121 du type alternatif. Cette tension d'alimentation 121 peut être une tension d'alimentation industrielle, telle qu'une phase d'un réseau d'alimentation monophasé ou triphasé. Selon cette possibilité, la tension d'alimentation 121 est une tension modulée à une fréquence sensiblement égale à 50 Hz ou à 60 Hz pour une tension nominale sensiblement égale à 220 volts ou à 110 volts.

Le réseau de communication 110 est un réseau de communication industriel permettant la communication entre les différents appareillages 200. Le réseau de communication 110 utilise préférentiellement un protocole de communication du type Ethernet. Le réseau de communication 110 peut être un réseau de communication filaire, à base de câble Ethernet ou de fibre optique, un réseau de communication radiofréquence utilisant, par exemple, un protocole wifi, un réseau de communication à base de courant porteur ou une solution hybride comportant plusieurs sous-réseaux de communication de technologies différentes.

Le réseau de synchronisation 130 est un réseau électrique délivrant une tension de synchronisation 131 à laquelle doivent être synchronisés les appareillages 200. La tension de synchronisation 131 est une tension alternative présentant une fréquence dite de synchronisation. La fréquence de synchronisation est préférentiellement égale à la fréquence de la tension d'alimentation. Selon une autre possibilité de l'invention, la fréquence de synchronisation peut être sensiblement égale à un multiple entier ou à une fraction entière de la fréquence de la tension d'alimentation.

Selon une possibilité non avantageuse de l'invention, la valeur de la fréquence de synchronisation peut être quelconque.

Selon une possibilité de l'invention la tension de synchronisation 131 peut être une phase du réseau de synchronisation 130, le réseau de synchronisation 130 étant, selon cette possibilité, un réseau électrique triphasé.

Le dispositif de synchronisation 300 comporte un premier système de mesure 311 adapté pour mesurer la tension de synchronisation 131 et pour déterminer un état de la tension de synchronisation 131.

Le dispositif de synchronisation 300 comporte en outre un deuxième système 312 de mesure adapté pour mesurer de la tension d'alimentation 121 et pour déterminer un état de la tension d'alimentation 121.

Le premier et le deuxième système de mesure 311, 312 sont agencés pour communiquer de manière à mesurer un décalage temporel à l'instant t entre la tension d'alimentation 121 et la tension de synchronisation 131.

Selon une possibilité de l'invention, les premier et deuxième systèmes de mesure 311, 312 peuvent être une première et seconde parties d'un circuit de détection synchrone permettant de mesurer un décalage de phase entre la tension d'alimentation 121 et la tension de synchronisation 131.

Pour une tension de synchronisation 131 présentant une fréquence de synchronisation identique à la fréquence de la tension d'alimentation 121, les premier et deuxième systèmes de mesure 311, 312 sont agencés pour mesurer un décalage temporel qui est un décalage de phase entre la tension d'alimentation 121 et la tension de synchronisation 131.

Le premier et le deuxième système de mesure 311, 312 forment des moyens de mesure de décalage temporel 310.

Le dispositif de synchronisation 300 comporte en outre une unité de calcul 320 communiquant avec le premier et le deuxième système de mesure 311, 312. L'unité de calcul 320 est agencée de manière à calculer, à partir de la valeur de décalage temporel mesurée par les premier et second systèmes de mesure 311, 312, un décalage temporel calculé. Ce décalage temporel calculé correspond au décalage temporel entre la tension d'alimentation 121 et la tension de synchronisation 131 lors du prochain passage de la tension d'alimentation 121 à un état donné.

Cet état donné peut être, selon une première possibilité de l'invention, un passage de la tension d'alimentation 121 à une valeur donnée. Selon une deuxième possibilité de l'invention, cet état donné peut également être le passage en front prédéterminé de la tension d'alimentation 121 à une valeur donnée, le front prédéterminé pouvant être le front montant ou le front descendant de la tension d'alimentation 121.

L'unité de calcul 320 est adaptée en outre pour calculer une valeur de synchronisation à partir de la valeur de décalage temporel calculé et de la valeur de la fréquence de synchronisation. Cette valeur de synchronisation peut être la valeur de décalage temporel calculé, telle qu'une valeur du déphasage calculé entre la tension d'alimentation 121 et la tension de synchronisation 131 lorsque la fréquence de synchronisation est sensiblement égale à la fréquence de la tension de synchronisation.

L'unité de calcul 320 forme un moyen de calcul 320.

Le dispositif comprend en outre un système de communication 330 adapté pour communiquer avec le réseau de communication 110. Le système de communication 330 est relié à l'unité de calcul 320 de manière à ce que le système de communication 330 communique, au travers du réseau de communication 110, la valeur de synchronisation à tous les modules de synchronisation 400 des appareillages 200 à synchroniser.

Le système de communication 330 peut également être adapté pour, lorsque la valeur de la fréquence de synchronisation n'est pas programmée dans au moins une partie des modules de synchronisation 400, communiquer la valeur de la fréquence de synchronisation audits modules de synchronisation 400 n'ayant pas la valeur de la fréquence de synchronisation programmée.

Chacun des appareillages 200 comportent une horloge 210 à synchroniser, le module de synchronisation 400 équipant ledit appareillage 200 étant relié à ladite horloge 210 de manière à permettre sa synchronisation.

Chacun des modules de synchronisation 400 comporte un moyen de connexion 410 au réseau de communication 110. Ce moyen de connexion 410 peut être un système de communication indépendant du système de communication de l'appareillage 200 ou peut être une connexion du module de synchronisation 400 à un système de communication de l'appareillage 200.

Chaque module de synchronisation 400 est relié au réseau d'alimentation électrique 120 et comporte en outre un moyen de détection 420 d'un état donné de la tension d'alimentation. Ce moyen de détection 420 peut être un système de mesure de tension 420 permettant de détecter le passage de la tension d'alimentation 121 à une valeur donnée. Selon une autre possibilité de l'invention, le système de mesure de tension 420 peut être adapté pour détecter le passage de la tension à une valeur donnée en front prédéterminé, ce front prédéterminé pouvant être le front montant ou le front descendant de la tension d'alimentation 121.

Le module de synchronisation 400 comporte en outre un système de synchronisation 430 de l'appareillage 200. Le système de synchronisation 430 du module de synchronisation 400 communique avec l'horloge 210 de l'appareillage 200 de manière à synchroniser l'horloge 210 à partir de la valeur de synchronisation et de la valeur de la fréquence de synchronisation. Cette valeur de la fréquence de synchronisation est soit une valeur préprogrammée dudit module de synchronisation, soit une valeur communiquée par le dispositif de synchronisation 300.

Selon une possibilité de l'invention le module de synchronisation 400 peut en outre comporter une unité de traitement 440 agencée pour calculer une valeur de désynchronisation reflétant le décalage de synchronisation réalisé lors de la synchronisation de l'appareillage 200. Cette unité de traitement est en outre agencée pour comparer, en valeur absolue, la valeur de désynchronisation avec une valeur de désynchronisation seuil.

Selon cette possibilité l'unité de traitement peut également être adaptée pour détecter un autre type d'erreur de synchronisation, tel que :
- une non réception de la valeur de synchronisation,
- une non réception de la valeur de la fréquence de synchronisation, lorsque celle-ci doit être communiquée audit module de synchronisation,
- une perte du réseau de communication,
- un problème dans la détection du passage de la tension d'alimentation à l'état donné.

L'unité de traitement 440 forme un moyen de traitement 440.

Selon cette même possibilité le module comprend un système de signalisation 450, tel qu'une alarme sonore, un écran d'affichage ou un envoi d'un signal d'erreur à un système de surveillance de l'installation 100, adapté pour coopérer avec l'unité de traitement 440 de manière à signaler lorsque l'unité de traitement 440 calcule une valeur de désynchronisation supérieure, en valeur absolue, à la valeur de désynchronisation seuil ou lorsqu'un autre type d'erreur de synchronisation est détecté.

Selon cette possibilité, le système de signalisation 450 forme un moyen de signalisation 450.

En fonctionnement, une telle installation 100, permet une synchronisation de chacun des appareillages 200 équipés d'un module de synchronisation 400 selon un procédé de synchronisation comportant les étapes consistant à :
a) mesurer, par le dispositif de synchronisation 300, un décalage temporel entre la tension d'alimentation 121 et la tension de synchronisation 131,
b) calculer, par le dispositif de synchronisation 300, la valeur de synchronisation à partir du décalage temporel, ladite valeur de synchronisation correspondant à un décalage temporel calculé entre la tension d'alimentation 121 et la tension de synchronisation 131 lors du prochain passage de la tension d'alimentation 121 à un état donné,
c) communiquer, par le dispositif de synchronisation 300 et au travers du réseau de communication 110, la valeur de synchronisation à l'appareillage 200 et la valeur de la fréquence de synchronisation si la valeur de la fréquence de synchronisation n'est pas programmée dans certain des modules de synchronisation des appareillages à synchroniser,
d) détecter, par le module de synchronisation 400 équipant chacun des appareillages 200, le passage de la tension d'alimentation 121 à l'état donné,
g) synchroniser, par chaque module de communication 400, l'appareillage 200 qu'il équipe sensiblement simultanément à la détection du passage de la tension d'alimentation 121 à l'état donné à partir de la valeur de synchronisation.

Selon une possibilité de l'invention le procédé de synchronisation peut comporter une étape a') qui précède l'étape a) consistant à :
a') détecter, par le module de synchronisation 400, le passage de la tension d'alimentation 121 à un second état donné.

Selon cette possibilité, l'étape a) est réalisée sensiblement simultanément à l'étape a').

Selon la possibilité de l'invention dans laquelle le module de synchronisation 400 comporte une unité de traitement 440 et un système de signalisation 450, le procédé de synchronisation peut comporter en outre des étapes e) de détection d'une erreur de synchronisation qui succède à l'étape d) et f) de signalisation d'un problème de synchronisation.

Une telle étape e) comporte les sous-étapes qui consistent à :
e') calculer, par chacun des modules de synchronisation 400 et pour l'appareillage 200 qu'il équipe, une valeur de désynchronisation reflétant le décalage de synchronisation nécessaire pour synchroniser ledit appareillage 200 lors de l'étape e),
e'') comparer, par chacun des modules de synchronisation 400, en valeur absolue de la valeur de désynchronisation avec une valeur seuil de désynchronisation et détecter pour l'appareillage une erreur de synchronisation si la valeur désynchronisation est supérieure en valeur absolue à une valeur seuil de désynchronisation.

Selon cette possibilité l'étape e) peut également être adaptée pour détecter un autre type d'erreur de synchronisation, tel que :
- une non réception de la valeur de synchronisation,
- une non réception de la valeur de la fréquence de synchronisation, lorsque celle-ci doit être communiquée audit module de synchronisation,
- une perte du réseau de communication,
- un problème dans la détection du passage de la tension d'alimentation à l'état donné.

L'étape f) de signalisation d'un problème consiste à :
f) signaler un problème de désynchronisation de chacun des appareillages 200 pour lesquels l'étape e) à permis de détecter une erreur de synchronisation.

Selon cette possibilité, si une erreur de synchronisation est détectée, le module de synchronisation est préférentiellement adapté pour conserver la synchronisation précédant l'étape de synchronisation de détection de l'erreur de synchronisation, ceci de manière à permettre le bon fonctionnement de l'appareillage dans l'attente d'une intervention de vérification du module de synchronisation. Ceci est réalisé par une non mise en oeuvre de l'étape g) lorsqu'une telle erreur de synchronisation est détectée.

Si dans le mode de réalisation décrit ci-dessus, le module de synchronisation 400 est un module de synchronisation 400 indépendant équipant un appareillage 200, un tel module de synchronisation 400 ou une partie dudit module de synchronisation 400 peut faire partie intégrante de l'appareillage 200, une unité de traitement de l'appareillage 200 pouvant, par exemple, occuper les fonctions du moyen de traitement du module de synchronisation 400, sans que l'on sorte du cadre de l'invention.

De même si dans le mode de réalisation du module de synchronisation 400 décrit ci-dessus, le calcul de la valeur de désynchronisation est obtenue en déterminant le décalage nécessaire pour synchroniser l'appareillage 200, ce calcule peut également être réalisé en utilisant une horloge interne dudit module de synchronisation 400 et en comparant la valeur de synchronisation avec ladite horloge interne, ceci sans que l'on sorte du cadre de l'invention.

De même, selon une possibilité de l'invention non décrite dans le mode de réalisation décrit ci-dessus, une valeur d'état donné peut être communiquée avec la valeur de synchronisation, cette valeur d'état donnée fournissant au module de synchronisation l'état donné de la tension d'alimentation électrique à détecter à l'étape d) du procédé.

Selon une possibilité de l'invention, les étapes e) de détection d'une erreur de synchronisation et f) de signalisation de cette erreur peuvent avoir lieu sensiblement simultanément à l'étape g) de synchronisation de l'appareillage ou après cette même étape g). Selon cette possibilité le procédé comprend alors une étape h) de synchronisation de l'appareillage selon une synchronisation précédente lors de laquelle aucune erreur de synchronisation n'a été détectée.

Si la tension d'alimentation 121 dans le mode de réalisation décrit ci-dessus est du type sinusoïdale, celle-ci peut être d'un autre type, tel qu'une tension créneaux ou une tension triangulaire, ceux-ci sans que l'on sorte du cadre de l'invention.

## Revendications

1. Procédé de synchronisation d'un appareillage (200) connecté à un réseau de communication (110), l'appareillage (200) étant relié à un réseau d'alimentation électrique (120) présentant au moins une tension d'alimentation (121) du type alternatif, le procédé étant **caractérisé en ce qu**'il comporte les étapes consistant à :
a) mesurer un décalage temporel entre la tension d'alimentation (121) et une tension de synchronisation (131) du type alternatif, la tension de synchronisation (131) présentant une fréquence de synchronisation,
b) calculer une valeur de synchronisation à partir du décalage temporel, ladite valeur de synchronisation correspondant à un décalage temporel calculé entre la tension d'alimentation (121) et la tension de synchronisation (131) lors du prochain passage de la tension d'alimentation (121) à un état donné,
c) communiquer, au travers du réseau de communication (110), la valeur de synchronisation à l'appareillage (200),
d) détecter par l'appareillage (200) le passage de la tension d'alimentation (121) à l'état donné,
g) synchroniser l'appareillage (200) sensiblement simultanément à la détection du passage de la tension d'alimentation (121) à l'état donné à partir de la valeur de synchronisation.

2. Procédé de synchronisation selon la revendication 1, dans lequel, lors de l'étape c) consistant à communiquer la valeur de synchronisation, la valeur de la fréquence de synchronisation est également communiquée à l'appareillage.

3. Procédé de synchronisation selon la revendication 1 ou 2, dans lequel l'état donné de la tension d'alimentation (121) est une valeur de la tension donnée préférentiellement égale à 0 volt.

4. Procédé de synchronisation selon la revendication 1 ou 2, dans lequel l'état donné de la tension d'alimentation (121) est un passage en front prédéterminé de la tension d'alimentation (121) à une valeur donnée, le front prédéterminé étant choisi dans le groupe comportant le front montant et le front descendant.

5. Procédé de synchronisation selon l'une des revendications précédentes, dans lequel le procédé comporte en outre une étape a') précédente de l'étape a), l'étape a') consistant à détecter le passage de la tension d'alimentation (121) à un second état donné, l'étape a) étant réalisée sensiblement simultanément à l'étape a').

6. Procédé de synchronisation selon la revendication 5, dans lequel le second état donné de la tension d'alimentation (121) est adapté de manière à ce que l'ensemble des étapes a) à c) soit effectuées avant le prochain passage de la tension d'alimentation (121) à l'état donné.

7. Procédé de synchronisation selon l'une des revendications précédentes, dans lequel le procédé comprend en outre les étapes consistant, entre les étapes d) et g), à :
e) détecter pour l'appareillage une erreur de synchronisation,
f) signaler un problème de désynchronisation de l'appareillage (200) si une erreur de synchronisation est détectée.

8. Procédé de synchronisation selon la revendication 7, dans lequel l'étape e) comprend au moins les sous-étapes consistant à :
e') calculer pour l'appareillage (200) d'une valeur de désynchronisation reflétant le décalage de synchronisation nécessaire pour synchroniser ledit appareillage (200) lors de l'étape e),
e'') comparer en valeur absolue la valeur de désynchronisation avec une valeur seuil de désynchronisation et détecter pour l'appareillage une erreur de synchronisation si la valeur de désynchronisation est supérieure en valeur absolue à une valeur seuil de désynchronisation.

9. Procédé de synchronisation selon l'une des revendications précédentes, dans lequel le réseau de communication (110) est un réseau de communication (110) utilisant un protocole de type Ethernet.

10. Procédé de synchronisation selon l'une des revendications précédentes, dans lequel la fréquence de la tension de synchronisation (131) est sensiblement égale, multiple entier ou fraction de la fréquence de la tension d'alimentation (121), la fréquence de la tension de synchronisation (131) étant préférentiellement égale à la fréquence de la tension d'alimentation (121).

11. Dispositif de synchronisation (300) pour synchroniser un appareillage, ledit dispositif de synchronisation (300) étant relié à un réseau d'alimentation électrique (120) présentant au moins une tension d'alimentation (121) de type alternatif, le dispositif de synchronisation (300) étant **caractérisé en ce qu**'il comporte :
- des moyens de mesure de décalage temporel adaptés pour mesurer un décalage temporel entre la tension d'alimentation (121) et une tension de synchronisation (131) du type alternatif, la tension de synchronisation (131) présentant une fréquence de synchronisation,
- un moyen de calcul adapté pour calculer une valeur de synchronisation correspondant à un décalage temporel calculé entre la tension d'alimentation (121) et la tension de synchronisation (131) lors du prochain passage de la tension d'alimentation (121) à un état donné,
- un moyen de communication adapté pour être connecté à un réseau de communication (110) et pour communiquer au travers dudit réseau de communication (110) la valeur de synchronisation.

12. Module de synchronisation (400) équipant un appareillage (200) à synchroniser, ledit module de synchronisation (400) étant relié à un réseau d'alimentation électrique(120) présentant au moins une tension d'alimentation (121) du type alternatif, le module de synchronisation étant **caractérisé en ce qu**'il comporte :
- un moyen de connexion à un réseau de communication (110) adapté pour recevoir une valeur de synchronisation correspondant à un décalage temporel calculé par le moyen de calcul d'un dispositif de synchronisation selon la revendication 11,
- un moyen de détection d'un état donné de la tension d'alimentation (121),
- un moyen de synchronisation de l'appareillage (200) à partir de la valeur de synchronisation communiquée au travers du réseau de communication (110).

13. Module de synchronisation (400) selon la revendication 12, dans lequel le module de synchronisation (400) comporte en outre :
- un moyen de traitement adapté pour détecter une erreur de synchronisation,
- un moyen de signalisation adapté pour signaler un problème de désynchronisation dudit module de synchronisation (400),
le moyen de traitement étant en outre adapté pour communiquer avec ledit moyen de signalisation de manière à signaler un problème de synchronisation lors de la détection d'une erreur de synchronisation.

## Patentansprüche

1. Verfahren zur Synchronisation eines Geräts (200), das mit einem Kommunikationsnetzwerk (110) verbunden ist, wobei das Gerät (200) mit einem Stromversorgungsnetzwerk (120) verbunden ist, das wenigstens eine Versorgungsspannung (121) vom Wechseltyp aufweist, wobei das Verfahren **dadurch gekennzeichnet ist, dass** es die folgenden Schritte umfasst:
a) Messen eines zeitlichen Versatzes zwischen der Versorgungsspannung (121) und einer Synchronisationsspannung (131) vom Wechseltyp, wobei die Synchronisationsspannung (131) eine Synchronisationsfrequenz aufweist,
b) Berechnen eines Synchronisationswerts ausgehend von dem zeitlichen Versatz, wobei der Synchronisationswert einem berechneten zeitlichen Versatz zwischen der Versorgungsspannung (121) und der Synchronisationsspannung (131) während des folgenden Übergangs der Versorgungsspannung (121) in einen gegebenen Zustand entspricht,
c) Mitteilen des Synchronisationswerts an das Gerät (200) mittels des Kommunikationsnetzwerks (110),
d) Erfassen des Übergangs der Versorgungsspannung (121) in den gegebenen Zustand durch das Gerät (200),
g) Synchronisieren des Geräts (200) im Wesentlichen gleichzeitig mit der Erfassung des Übergangs der Versorgungsspannung (121) in den gegebenen Zustand ausgehend von dem Synchronisationswert.

2. Verfahren zur Synchronisation nach Anspruch 1, bei dem während des Schritts c), der darin besteht, den Synchronisationswert mitzuteilen, der Wert der Synchronisationsfrequenz ebenfalls an das Gerät mitgeteilt wird.

3. Verfahren zur Synchronisation nach Anspruch 1 oder 2, bei dem der gegebene Zustand der Versorgungsspannung (121) ein gegebener Wert der Spannung ist, vorzugsweise gleich 0 Volt.

4. Verfahren zur Synchronisation nach Anspruch 1 oder 2, bei dem der gegebene Zustand der Versorgungsspannung (121) ein vorbestimmter Flankenübergang der Versorgungsspannung (121) auf einen gegebenen Wert ist, wobei die vorbestimmte Flanke ausgewählt ist aus der Gruppe umfassend die ansteigende Flanke und die abfallende Flanke.

5. Verfahren zur Synchronisation nach einem der vorhergehenden Ansprüche, bei dem das Verfahren ferner einen Schritt a') umfasst, der dem Schritt a) vorangeht, wobei der Schritt a') darin besteht, den Übergang der Versorgungsspannung (121) in einen zweiten gegebenen Zustand zu erfassen, wobei der Schritt a) im Wesentlichen gleichzeitig mit dem Schritt a') ausgeführt wird.

6. Verfahren zur Synchronisation nach Anspruch 5, bei dem der zweite gegebene Zustand der Versorgungsspannung (121) dazu ausgelegt ist, dass die Gesamtheit der Schritte a) bis c) vor dem nächsten Übergang der Versorgungsspannung (121) in den gegebenen Zustand ausgeführt wird.

7. Verfahren zur Synchronisation nach einem der vorhergehenden Ansprüche, bei dem das Verfahren ferner zwischen den Schritten d) und g) die folgenden Schritte umfasst:
e) Erfassen eines Synchronisationsfehlers für das Gerät
f) Signalisieren eines Desynchronisationsproblems des Geräts (200), wenn ein Synchronisationsfehler erfasst wird.

8. Verfahren zur Synchronisation nach Anspruch 7, bei dem der Schritt e) wenigstens die folgenden Teilschritte umfasst:
e') Berechnen eines Desynchronisationswerts für das Gerät (200), der den benötigten Synchronisationsversatz zum Synchronisieren des Geräts (200) wiedergibt, während des Schritts e),
e") Vergleichen des Desynchronisationswerts mit einem Desynchronisationsschwellenwert als Absolutwert, und Erfassen eines Synchronisationsfehlers für das Gerät, wenn der Desynchronisationswert als Absolutwert größer ist als ein Desynchronisationsschwellenwert.

9. Verfahren zur Synchronisation nach einem der vorhergehenden Ansprüche, bei dem das Kommunikationsnetzwerk (110) ein Kommunikationsnetzwerk (110) ist, das ein Protokoll vom Typ Ethernet verwendet.

10. Verfahren zur Synchronisation nach einem der vorhergehenden Ansprüche, bei dem die Frequenz der Synchronisationsspannung (131) im Wesentliche gleich der, ein ganzzahliges Vielfaches von der oder ein Bruchteil der Frequenz der Versorgungsspannung (121) ist, wobei die Frequenz der Synchronisationsspannung (131) vorzugsweise gleich der Frequenz der Versorgungsspannung (121) ist.

11. Synchronisationsvorrichtung (300) zum Synchronisieren eines Geräts, wobei die Synchronisationsvorrichtung (300) mit einem Stromversorgungsnetzwerk (120) verbunden ist, das wenigstens eine Versorgungsspannung (121) vom Wechseltyp aufweist, wobei die Synchronisationsvorrichtung (300) **dadurch gekennzeichnet ist, dass** sie umfasst:
- Mittel zum Messen des zeitlichen Versatzes, die dazu ausgelegt sind, einen zeitlichen Versatz zwischen der Versorgungsspannung (121) und einer Synchronisationsspannung (131) vom Wechseltyp zu messen, wobei die Synchronisationsspannung (131) eine Synchronisationsfrequenz aufweist,
- eine Recheneinrichtung, die dazu ausgelegt ist, einen Synchronisationswert entsprechend einem berechneten zeitlichen Versatz zwischen der Versorgungsspannung (121) und der Synchronisationsspannung (131) während des nächsten Übergangs der Versorgungsspannung (121) in einem gegebenen Zustand zu berechnen,
- eine Kommunikationseinrichtung, die dazu ausgelegt ist, an ein Kommunikationsnetzwerk (110) angeschlossen zu sein und mittels des Kommunikationsnetzwerks (110) den Synchronisationswert mitzuteilen.

12. Synchronisationsmodul (400), mit dem ein zu synchronisierendes Gerät (200) ausgestattet ist, wobei das Synchronisationsmodul (400) mit einem Stromversorgungsnetzwerk (120) verbunden ist, das wenigstens eine Versorgungsspannung (121) vom Wechseltyp aufweist, wobei das Synchronisationsmodul **dadurch gekennzeichnet ist, dass** es umfasst:
- eine Einrichtung zur Verbindung mit einem Kommunikationsnetzwerk (110), die dazu ausgelegt ist, einen Synchronisationswert entsprechend einem zeitlichen Versatz zu empfangen, der durch die Recheneinrichtung einer Synchronisationsvorrichtung nach Anspruch 11 berechnet ist,
- eine Einrichtung zur Erfassung eines gegebenen Zustands der Versorgungsspannung (121),
- eine Einrichtung zur Synchronisation des Geräts (200) ausgehend von dem Synchronisationswert, der durch das Kommunikationsnetzwerk (110) mitgeteilt ist.

13. Synchronisationsmodul (400) nach Anspruch 12, bei dem das Synchronisationsmodul (400) ferner umfasst:
- eine Verarbeitungseinrichtung, die dazu ausgelegt ist, einen Synchronisationsfehler zu erfassen,
- eine Signalisiereinrichtung, die dazu ausgelegt ist, ein Desynchronisationsproblem des Synchronisationsmoduls (400) zu signalisieren,
wobei die Verarbeitungseinrichtung ferner dazu ausgelegt ist, mit der Signalisiereinrichtung derart zu kommunizieren, dass ein Synchronisationsproblem bei der Erfassung eines Synchronisationsfehlers signalisiert wird.

## Claims

1. A method of synchronizing an equipment unit (200) connected to a communications network (110), the equipment unit (200) being connected to an electrical power supply network (120) providing at least one alternating current power supply voltage (121), the method being **characterized in that** it includes the steps of:
a) measuring a time difference between the power supply voltage (121) and an alternating current synchronization voltage (131), the synchronization voltage (131) having a synchronization frequency;
b) computing a synchronization value from the time difference, said synchronization value corresponding to a computed time difference between the power supply voltage (121) and the synchronization voltage (131) the next time the power supply voltage (121) passes through a given state;
c) communicating the synchronization value to the equipment unit (200) via the communications network (110);
d) the equipment unit (200) detecting the power supply voltage (121) passing through the given state; and
g) synchronizing the equipment unit (200) substantially simultaneously with detecting the power supply voltage (121) passing through the given state from the synchronization value.

2. A synchronization method according to claim 1, wherein the value of the synchronization frequency is also communicated to the equipment unit during the step c) of communicating the synchronization value.

3. A synchronization method according to claim 1 or claim 2, wherein the given state of the power supply voltage (121) is a given voltage value that is preferably equal to zero volts.

4. A synchronization method according to claim 1 or claim 2, wherein the given state of the power supply voltage (121) is a predetermined edge of the power supply voltage (121) passing through a given value, the predetermined edge being chosen from the group comprising the rising edge and the falling edge.

5. A synchronization method according to any preceding claim, wherein the method further includes, preceding the step a), a step a') of detecting the power supply voltage (121) passing through a second given state, the step a) being carried out substantially simultaneously with the step a').

6. A synchronization method according to claim 5, wherein the second given state of the power supply voltage (121) is such that all the steps a) to c) are carried out before the power supply voltage (121) next passes through the given state.

7. A synchronization method according to any preceding claim, wherein the method further includes, between the steps d) and g), the steps of:
e) detecting an equipment unit synchronization error; and
f) reporting a desynchronization problem affecting the equipment unit (200) if a synchronization error is detected.

8. A synchronization method according to claim 7, wherein the step e) includes at least the sub-steps of:
· e') computing for the equipment unit (200) a desynchronization value reflecting the synchronization offset necessary to synchronize said equipment unit (200) during the step e); and
· e") comparing the absolute value of the desynchronization value with the absolute value of a desynchronization threshold value and detecting a desynchronization error affecting the equipment unit if the absolute value of the desynchronization value is greater than the absolute value of the desynchronization threshold value.

9. A synchronization method according to any preceding claim, wherein the communications network (110) is a communications network (110) utilizing a protocol of the Ethernet type.

10. A synchronization method according to any preceding claim, wherein the frequency of the synchronization voltage (131) is substantially equal to, an integer multiple of, or an integer fraction of the frequency of the power supply voltage (121), the frequency of the synchronization voltage (131) preferably being equal to the frequency of the power supply voltage (121).

11. A synchronization device (300) for synchronizing an equipment unit, said synchronization device (300) being connected to an electrical power supply network (120) providing at least one alternating current power supply voltage (121), the synchronization device (300) being **characterized in that** it includes:
· time difference measurement means adapted to measure a time difference between the power supply voltage (121) and a synchronization voltage (131);
· computation means adapted to compute a synchronization value corresponding to a time difference; and
· communications means adapted to be connected to a communications network (110) and to communicate a synchronization value via said communications network (110).

12. A synchronization module (400) for equipping an equipment unit (200) for synchronizing, said synchronization module (400) being connected to an electrical power supply network (120) providing at least one alternating current power supply voltage (121), the synchronization module being **characterized in that** it includes:
· means for connecting it to a communications network (110) and adapted to receive a synchronization value;
· means for detecting a given state of the power supply voltage (121); and
· means for synchronizing the equipment unit (200) on the basis of the synchronization value communicated via the communications network (110).

13. A synchronization module (400) according to claim 12, wherein the synchronization module (400) further includes:
· processing means adapted to detect a synchronization error;
· signaling means adapted to report a desynchronization problem affecting said synchronization module (400); and
the processing means being further adapted to communicate with said signaling means to report a synchronization problem on detecting a synchronization error.
